# EUROPÄISCHE PATENTSCHRIFT

(11) **EP 2 234 817 B1**
(45) Veröffentlichungstag und Bekanntmachung des Hinweises auf die Patenterteilung: **26.04.2017**
(21) Anmeldenummer: 09702188.5
(22) Anmeldetag: 16.01.2009
(51) Int. Cl.: B42D 25/00

(54) **FOLIENELEMENT**
FILM ELEMENT
ÉLÉMENT DE FILM

(30) Priorität: 17.01.2008 DE 102008005019
(43) Veröffentlichungstag der Anmeldung: 06.10.2010
(73) Patentinhaber: OVD Kinegram AG, 6301 Zug (CH)
(72) Erfinder: TOMPKIN, Wayne, Robert, CH-5400 Baden (CH); SCHILLING, Andreas, CH-6332 Hagendorn (ZG) (CH)
(74) Vertreter: Zinsinger, Norbert
(86) Internationale Anmeldenummer: PCT/EP2009/000268
(87) Internationale Veröffentlichungsnummer: WO 2009/090091

(56) Entgegenhaltungen:
- EP-A- 0 609 683
- WO-A-01/03945

## Beschreibung

Die Erfindung betrifft ein Folienelement mit einer Replizierschicht, in die eine optisch wirksame Oberflächenstruktur abgeformt ist.

Derartige Folienelemente werden häufig dazu genutzt, um das Kopieren, Fälschen oder eine Manipulation von Sicherheitsdokumenten und den Missbrauch solcher Dokumente zu erschweren oder möglichst zu verhindern. Solche Folienelemente finden häufig Verwendung zur Sicherung von beispielsweise Banknoten, Kreditkarten, Geldkarten, ID-Dokumenten, Tickets, Software-Zertifikaten und dergleichen. Weiter können solche Folienelemente auch im Markenschutzbereich eingesetzt werden, beispielsweise indem diese Folienelemente auf Gegenstände, Etiketten oder Verpackungen von Produkten aufgebracht bzw. integriert werden, um so beispielsweise die Herkunft des Produktes zu authentisieren.

Um das Kopieren, Fälschen oder die Manipulation von Sicherheitsdokumenten zu erschweren ist es bekannt, ein diffraktives Oberflächenrelief, welches durch Diffraktion eine optisch variable Information bereit stellt, mit einem Dünnfilm-Schichtsystem zu überlagern, welches mittels Interferenz einen optisch variablen Farbeindruck generiert. So wird beispielsweise in WO 01/03945 A1 ein Sicherheitsprodukt beschrieben, das ein durchsichtiges Substrat aufweist, auf dessen einer Seite ein Dünnfilm-Schichtsystem angeordnet ist. Das Dünnfilm-Schichtsystem besteht aus einer Absorptionsschicht, die auf dem durchsichtigen Substrat aufgebracht ist und einer Distanzschicht, welche aus einem dielektrischen Material besteht. Bei entsprechender Wahl der Schichtdicke der Distanzschicht wird durch Interferenz ein blickwinkelabhängiger Farbverschiebungseffekt generiert. Auf der dem Dünnfilm-Schichtsystem gegenüber liegenden Seite oder auch auf seiten des Dünnfilm-Schichtsystems ist in das transparente Substrat weiter ein diffraktives Oberflächenrelief abgeformt, welches beispielsweise die Illusion eines dreidimensionalen Bildes für den Betrachter generiert. Der durch das Dünnfilm-Schichtsystem mittels Interferenz erzeugte optische Farbeffekt und die durch Diffraktion am Oberflächenrelief erzeugten optischen Effekte überlagern sich, wodurch sich ein optischer Effekt ergibt, der schwer nachzuahmen und zu kopieren ist. Ein ähnliches optisches Sicherheitselement wird auch in WO 02/00445 A1 beschrieben.

Weiter wird in US 4 874 213 ein Verfahren beschrieben, den durch ein Volumen-Hologramm erzielbaren optischen Effekt mittels eines in einer Oberfläche abgeprägten Reliefprofils zu erzielen. Hierzu wird das Volumen-Hologramm in eine photosensitive Schicht kopiert und sodann die Bragg'schen-Ebenen des Volumen-Hologramms durch ein Öffnungs-Hologramm in einem vorzugsweise regelmäßigen Muster geöffnet, so dass durch Reflexion an den geöffneten Flächen und Interferenz das Volumen-Hologramm sichtbar wird. Um eine Verfälschung der Darstellung des Volumen-Hologramms durch das Öffnungs-Hologramm möglichst zu vermeiden, wird dieses so gewählt, dass dessen Diffraktionseffizienz ein Maximum im Bereich der nullten Ordnung besitzt.

Das Dokument US 4,874,213 offenbart ein Folienelement nach dem Oberbegriff des Anspruchs 1.

Der Erfindung liegt nun die Aufgabe zugrunde, ein Folienelement anzugeben, welches einen optisch variablen, farbigen Eindruck vermittelt und kostengünstig zu fertigen ist.

Diese Aufgabe wird von einem Folienelement nach Anspruch 1 gelöst.

Durch die Erfindung können Sicherheitsmerkmale bereitgestellt werden, welche auch durch holographische Verfahren, beispielsweise mittels eines Volumen-Hologramms, nicht nachgeahmt werden können. Die von einem erfindungsgemäßen Folienelement bereit gestellten Sicherheitsmerkmale können so - wie weiter unten verdeutlicht - beispielsweise einen vollfarbigen optisch variablen Eindruck vermitteln oder einen optisch variablen, einen Farbwechsel zeigenden Eindruck vermitteln. Solche Effekte können auch nicht durch Kombination eines Dünnfilm-Schichtsystems mit einer diffraktiven Struktur nachgeahmt werden. Im Weiteren kann das erfindungsgemäße Folienelement mit weniger Prozessschritten und ohne Einsatz kostspieliger Materialien gefertigt werden. So sind beispielsweise deutlich weniger Prozessschritte notwendig als bei der Herstellung eines Sicherheitselements, welches ein Dünnfilm-Schichtsystem enthält. Durch die Erfindung wird ein Folienelement geschaffen, welches einen nur schwer nachahmbaren optisch variablen Eindruck zeigt und im Weiteren sehr kostengünstig zu fertigen ist.

Durch die Substrukturierung der Hüllkurve, durch welche die erste Information im wesentlichen durch Beugung des Lichts in der ersten oder minus-ersten Beugungsordnung generiert wird, wird der Farbwert des gebeugten Lichts zusätzlich durch Interferenz beeinflusst, so dass sich ein farbiger optisch variabler Eindruck ergibt, der sich signifikant von einem normalen Regenbogenfarbeinruck unterscheidet.

Unter optischem Abstand und optischer Tiefe wird der um den optischen Brechungsindex korrigierte, d.h. mit dem Brechungsindex multiplizierte geometrische Abstand bzw. geometrische Tiefe verstanden, wobei hierbei der Brechungsindex bezogen ist auf das Material, welches im Fall eines in Reflexion wirkenden Folienelements in Richtung des einfallenden Lichts oberhalb der Oberfläche der Replizierschicht , in die das Oberflächenrelief abgeformt ist, bzw. oberhalb einer auf diese Oberfläche aufgebrachten Reflexionsschicht vorgesehen ist. Fällt das Licht von Seiten der Replizierschicht auf diese Oberfläche bzw. auf die Reflexionsschicht ein, so ist der Brechungsindex der Replizierschicht für die Bestimmung des geometrischen Abstands aus dem optischen Abstand maßgebend. Im Fall eines in Transmission wirkenden Folienelements ergibt sich der optische Abstand und die optische Tiefe aus dem geometrischen Abstand bzw. der geometrischen Tiefe multipliziert mit der Differenz der Brechungsindizes der an das Oberflächenrelief angrenzenden Schichten.

Vorteilhafte Ausgestaltungen der Erfindung sind in den Unteransprüchen bezeichnet.

Gemäß eines bevorzugten Ausführungsbeispiels der Erfindung besitzt die erste Hüllkurve ein asymmetrisches Reliefprofil. Hierdurch lassen sich zahlreiche, sehr interessante optische Effekte generieren, bei denen bei Drehung des Folienelements ein Farb-/Kipp-Effekt oder eine Veränderung des Farbeindrucks dahingehend generiert wird, dass ein vorher farblos (reflektiv) erscheinender Bereich oder holographische Darstellung bei Drehung des Folienelements in einem vordefinierten Farbwert erscheint. Weiter lassen sich so auch Bewegungseffekte generieren, bei denen die Farbe eines (dreidimensional erscheinenden) Objekts sich im Laufe der Bewegung verändert.

Ein asymmetrisches Reliefprofil hat eine asymmetrische, d.h. nicht symmetrische Reliefform. Der Grad der Asymmetrie wird hierbei vorzugsweise dadurch bestimmt, wie weit der Abstand von einem lokalen Maxima des Reliefprofils zu dem nächstliegenden lokalen Minima in der einen Richtung von dem Abstand zu dem nächstliegenden lokalen Minima in der gegenüberliegenden Richtung abweicht. Der Abstand zwischen zwei benachbarten lokalen Minima des Reliefprofils beträgt beispielsweise d. Der Abstand von dem einen lokalen Minima zu dem zwischen den beiden lokalen Minima liegenden lokalen Maxima des Reliefprofils beträgt beispielsweise d1, der von dem anderen lokalen Minima zu dem dazwischen liegenden lokalen Maxima d2, wobei d = d1 + d2. Das Verhältnis des größeren der beiden Abstände d1 und d2 zu dem Abstand d bestimmt den Symmetriefaktor S, wobei in dem Fall, in dem d1 ≤ d2 ist, S = d1 : d, und in dem anderen Fall S = d2 : d ist. Falls es sich bei dem Reliefprofil um ein periodisches Reliefprofil handelt, entspricht d der Periodenlänge, d.h. dem Abstand, in dem sich die (gleichartigen) Strukturelemente, aus denen sich das Reliefprofil zusammensetzt, wiederholen. Vorzugsweise setzt sich ein solches asymmetrisches Reliefprofil aus dreieckförmigen Strukturelementen oder einem Dreieck angenäherten Strukturelementen zusammen, die durch die geometrischen Faktoren d, S sowie durch die optische Tiefe der Reliefstruktur bestimmt werden. Damit kann die Hüllkurve durch diese Parameter definiert werden.

Vorzugsweise liegt hierbei der Symmetriefaktor S im Bereich von 70 % bis 100 %, weiter bevorzugt im Bereich von 85 % bis 95 %. Bei Einhaltung dieser Bedingungen zeigt sich ein klarer, einprägsamer Farbwechseleffekt mit großer Reinheit der Farben beim Verdrehen des Folienelements.

Weiter ist es auch möglich, dass die erste Hüllkurve von einer computer-generierten diffraktiven Struktur, beispielsweise einem Kinegram®, gebildet wird, welche in Abhängigkeit vom Blickwinkel unterschiedliche Darstellungen zeigt. Die Hüllkurve weist in einer ersten Raumrichtung eine erste konstante Spatialfrequenz auf. Bei der Hüllkurve kann es sich so auch um ein eindimensionales Gitter handeln. Auch bei solchen Strukturen zeigen sich bei Drehung des Folienelements Farbveränderungseffekte, die sich von den durch Dünnfilm-Schichtsysteme erzielbaren Farbeffekten sowie von einem normalen Regenbogenfarbeindruck deutlich unterscheiden. Die Hüllkurve weist in einer zweiten, zur ersten Raumrichtung unterschiedlichen zweiten Raumrichtung eine zweite konstante Spatialfrequenz auf, die sich von der ersten konstanten Spatialfrequenz unterscheidet. Auch auf diese Weise lassen sich mittels der Erfindung Sicherheitselemente herstellen, welche in Abhängigkeit vom Drehwinkel einen unterschiedlichen Farbeindruck vermitteln.

Bevorzugt weist der erste Bereich in zumindest einer Richtung eine erste Abmessung von mehr als 50 µm, insbesondere mehr als 100 µm auf. Die Elementflächen werden bevorzugt größer als 100 nm gewählt und nehmen bevorzugt zwischen 10 %. und 50 %, insbesondere zwischen 10 % und 33 % jedes Elements ein. Die Hüllkurve weist bevorzugt eine optische Tiefe zwischen dem 3-fachen und dem 10-fachen des ersten optischen Abstands auf, wobei der erste optische Abstand im Fall eines in Reflexion wirkenden Folienelements in etwa der halben Wellenlänge des Farbwerts bei einer bestimmten Betrachtungsrichtung entsprechen soll und bei Wirkung in Transmission in etwa der Wellenlänge dieses Farbwerts entsprechen soll. Die Hüllkurve hat weiter bevorzugt eine optische Tiefe von weniger als dem vierfachen des ersten optischen Abstands. Durch die Wahl derartiger Parameter ist es möglich, die Darstellung der ersten Information zu verbessern und zu vermeiden, dass die Substrukturierung die Darstellung der ersten Information negativ beeinflusst.

Die Anordnung der Elementflächen im Wesentlichen parallel zu einer Grundfläche bedeutet zum einen, dass die Elementflächen im Wesentlichen parallel zueinander angeordnet sind. Gemäß einer ersten Ausführungsform ist die Grundfläche weiter parallel zu der von der der ersten Oberfläche der Replizierschicht gegenüberliegenden zweiten Oberfläche der Replizierschicht (Unterseite der Replizierschicht) aufgespannten Ebene parallel angeordnet. Dies bedeutet, dass dann die Elementflächen im Wesentlichen parallel zu der Unterseite der Replizierschicht angeordnet sind. Weitere vorteilhafte Effekte lassen sich jedoch dadurch erzielen, dass die Grundfläche nicht parallel zu der Unterseite der Replizierschicht angeordnet ist und somit einen Neigungswinkel, vorzugsweise einen Neigungswinkel von mehr als 5°, weiter bevorzugt von mehr als 10° mit der Unterseite der Replizierschicht einschließt. Durch Veränderung der Orientierung dieses Neigungswinkels kann das optische Erscheinungsbild, wie weiter unten erläutert, weiter verändert werden. Im Weiteren hat sich gezeigt, dass durch eine derartige Neigung der Elementflächen gegenüber der Unterseite die Farbausbeute erhöht werden kann und eine Einzelfarbe bestehend aus einer Primärfarbe von hoher Intensität begleitet von ein oder mehreren Nebenfarben von geringer Intensität erzielt werden kann. Es kann eine besonders hohe Leuchtkraft erzielt werden, die höher als die Leuchtkraft eines Volumenhologramms ist. Eine derartige Neigung der Elementflächen kann beispielsweise durch die Verwendung von Prisma-Kopplern und einem in einer dichromatischen Gelatine aufgezeichneten Hologramm als Zwischenkopie zur Fertigung des (Oberflächenrelief-)Masters gefertigt werden. Weiter kann auch durch eine entsprechende Neigung des Objekts, welches mit einem der sich überlagernden Laserstrahlen bei Fertigung dieser Zwischenkopie bestrahlt wird, vorzugsweise kombiniert mit einem Prisma-Koppler, eine derartige Neigung der Elementflächen bewirkt werden.

Die Grundebene entspricht bevorzugt der Grundfläche, d.h. die Beabstandung der im Wesentlichen parallel zueinander angeordneten Elementflächen wird - wie üblich - durch die Beabstandung entlang einer senkrecht auf den Grundflächen stehenden Geraden bestimmt.

Gemäß einer weiteren Ausführungsform ist es hier jedoch auch möglich, dass die Grundebene der von der der ersten Oberfläche der Replizierschicht gegenüberliegenden zweiten Oberfläche der Replizierschicht, d.h. der Unterseite der Replizierschicht, bestimmt wird, insbesondere falls die Grundfläche einen Neigungswinkel mit der Unterseite einschließt.

Der erste Bereich ist musterförmig, insbesondere in Form eines Symbols oder eines Portraits ausgeformt. Hierdurch wird der Schutz gegen Nachahmungen weiter verbessert.

In einem zweiten Bereich ist die Oberflächenstruktur von einem zweiten, sich von dem ersten Oberflächenrelief unterscheidenden Oberflächenrelief gebildet ist, welches eine zweite Information darstellt. Durch Anwendung dieses Prinzips lassen sich eine Vielzahl von Sicherheitsmerkmalen generieren, welche nicht oder nur sehr schwer durch andere Technologien nachahmbar sind und optisch überraschende und einprägsame Effekte zeigen. Vorteilhaft ist es hierbei weiter, dass der mindestens eine zweite Bereich an den mindestens einen ersten Bereich oder die ersten Bereiche angrenzt. Weiter ist es vorteilhaft, wenn der erste Bereich den zweiten Bereich oder der zweite Bereich den ersten Bereich oder die ersten Bereiche vollständig umschließt. Der erste und/oder der zweite Bereich ist musterförmig, in Form einer dritten bzw. vierten Information ausgeformt und die erste und zweite Information und/oder die dritte und die vierte Information stellen vorzugsweise sich ergänzende Informationen dar. Durch das Ineinandergreifen dieser durch verschiedene Effekte generierten Informationen wird ein besonders hoher Manipulationsschutz erzielt.

Bei dem zweiten Oberflächenrelief handelt es sich um ein achromatisches Oberflächenrelief, insbesondere eine Mattstruktur, eine Makrostruktur oder ein Blaze-Gitter. Der so vom ersten Bereich generierte optische Effekt ist sehr einprägsam und kann nicht oder nur sehr schwer durch holographische Verfahren, beispielsweise mittels eines Volumen-Hologramms, nachgeahmt werden. Eine einzige Schicht des Folienelements zeigt in verschiedenen Bereichen deutlich unterschiedliche optische Effekte, die als solches neuartig sind oder lediglich durch unterschiedliche Herstellungstechnologien und Überlagerung mehrerer unterschiedlicher Schichten generiert werden können.

Gemäß eines weiteren bevorzugten Ausführungsbeispiels der Erfindung besteht der erste Bereich und/oder der zweite Bereich jeweils aus zwei oder mehr ersten bzw. zweiten Teilbereichen, die eine streifenförmige Formgebung besitzen. Unter streifenförmiger Formgebung wird hierbei eine Formgebung verstanden, bei der die Teilbereiche eine deutlich (mindestens Faktor 2, vorzugsweise Faktor 10) größere Länge als Breite besitzen. Die Flächenschwerpunktslinien eines solchen streifenförmigen Teilbereichs können hierbei die Form einer Geraden, jedoch auch eine sonstige Formgebung, beispielsweise die Formgebung einer Schlangenlinie, einer Zickzack-Linie oder eines Kreisrings, besitzen. Vorzugsweise weisen die ersten und zweiten Teilbereiche eine Breite von weniger als 300 µm auf und sind gemäß einem ersten bzw. zweiten Raster angeordnet. Die Rasterweite des ersten und zweiten Rasters ist vorzugsweise geringer als 200 µm und die streifenförmigen Teilbereiche sind vorzugsweise parallel zueinander ausgerichtet.

Gemäß einer weiteren bevorzugten Ausführungsform der Erfindung besteht sowohl der erste Bereich als auch der zweite Bereich aus streifenförmigen

Teilbereichen, welche ineinander geschachtelt sind, sodass in ein und demselben Flächenbereich für den Betrachter unterschiedliche, durch das erste bzw. zweite Oberflächenrelief vermittelte Informationen sichtbar gemacht werden können.

Gemäß eines weiteren bevorzugten Ausführungsbeispiels der Erfindung ist die Breite der streifenförmigen Teilbereiche zur Ausbildung eines Graustufenbildes moduliert.

Gemäß einer weiteren bevorzugten Ausführungsform der Erfindung ist ein Bereich der Oberflächenstruktur in eine Vielzahl aneinander grenzender Domänen unterteilt, die in zumindest eine Richtung eine Abmessung von weniger als 300 µm besitzen (unterhalb der Auflösungsgrenze des menschlichen Auges bei normalem Betrachtungsabstand), wobei in den Domänen einer erste Gruppe von Domänen jeweils ein erster Bereich, d.h. ein Bereich mit einem ersten Oberflächenrelief, und ein zweiter Bereich, d.h. ein Bereich mit einem zweiten Oberflächenrelief, vorgesehen ist. Hierbei ist es möglich, dass jede der Domänen einen ersten Bereich und einen zweiten Bereich aufweist. Weiter ist auch möglich, dass in den Domänen einer zweiten Gruppe von Domänen jeweils ein erster Bereich, aber kein zweiter Bereich und in den Domänen einer dritten Gruppe von Domänen jeweils ein zweiter Bereich aber kein erster Bereich vorgesehen ist. Der Bereich zeigt so ein optisch variables Sicherheitsmerkmal, welches je nach Blickrichtung unterschiedliche Informationen in unterschiedlichen Farbeindrücken zeigt. Hierbei ist es möglich, dass der erste und der zweite Abstand sich voneinander unterscheiden und die erste und die zweite Hüllkurve übereinstimmen oder nicht übereinstimmen, so dass sich für den menschlichen Betrachter eine mehrfarbige, optisch variable Darstellung in dem Bereich zeigt. Hierdurch ist es beispielsweise möglich, dass sich für den Betrachter in dem Bereich der Eindruck einer mehrfarbigen, optisch variablen Darstellung ergibt.

Weiter ist es auch möglich, dass Domänen weitere Bereiche aufweisen, die eine den Oberflächenstrukturen der ersten und zweiten Bereiche entsprechende Oberflächenstruktur aufweisen, die in ihrer Hüllkurve mit der ersten und zweiten Hüllkurve übereinstimmt und sich in ihrem optischen Abstand von dem ersten und zweiten optischen Abstand unterscheidet. Hierdurch lassen sich weitere (Primär-)Farbwerte darstellen.

Vorzugsweise wird hierbei der Flächenanteil der ersten und/oder zweiten Bereiche und/oder der ein oder mehreren weiteren Bereiche in den Domänen variiert, wodurch die Anzahl der in dem Bereich darstellbaren Farbwerte erhöht werden kann. Vorzugsweise unterscheiden sich weiter die erste und die zweite Hüllkurve voneinander und beugen das einfallende Licht in voneinander unterschiedliche erste und zweite Richtungen. Hierdurch lassen sich interessante Bewegungseffekte erzielen, bei denen sich nicht nur die Lage, Form oder Größe eines Objekts beim Drehen oder Kippen verändert, sondern sich auch dynamisch dessen Farbwert verändert.

Gemäß eines weiteren bevorzugten Ausführungsbeispiels der Erfindung weisen die Domänen weiter dritte und vierte Bereiche auf, in denen jeweils einer dem ersten Oberflächenprofil bzw. dem zweiten Oberflächenprofil entsprechendes Oberflächenprofil die Oberflächenstruktur bildet. Das dritte und das vierte Oberflächenprofil unterscheiden sich lediglich dahingehend von dem ersten Oberflächenprofil bzw. von dem zweiten Oberflächenprofil, dass sich deren jeweiliger Abstand von dem ersten Abstand bzw. dem zweiten Abstand unterscheidet. Zusätzlich ist es weiter auch möglich, dass die Domänen noch weitere Bereiche aufweisen, deren Oberflächenprofil sich wie die dritten und vierten Bereiche in dem jeweiligen Abstand von dem ersten bzw. zweiten Oberflächenprofil unterscheiden oder die eine sich von der ersten und zweiten Hüllkurve unterscheidende Hüllkurve aufweisen und ansonsten wie die ersten und zweiten Oberflächenprofile substrukturiert sind. Durch diese Maßnahmen ist es möglich, in dem Bereich für den menschlichen Betrachter den Eindruck eines Vollfarben-Hologramms zu generieren. Dieser Eindruck ist durch holographische Methoden, beispielsweise mittels eines Volumen-Hologramms, nicht nachahmbar.

Gemäß eines weiteren bevorzugten Ausführungsbeispiels der Erfindung ist auf die erste Oberfläche der Replizierschicht eine Reflexionsschicht aufgebracht, insbesondere eine metallische Reflexionsschicht aufgebracht. Es ist jedoch weiter möglich, dass auf die erste Oberfläche der Replizierschicht eine optische Trennschicht, insbesondere eine HRI-Schicht, aufgebracht wird, so dass der durch die Oberflächenstruktur generierte optische Effekt nicht nur in Reflexion sondern auch in Transmission sichtbar ist. Hierbei ist es möglich, dass die Dicke der optischen Trennschicht kleiner oder auch größer als der erste bzw. der zweite optische Abstand ist. Weiter ist es auch möglich, dass die Replizierschicht bereits einen hohen Brechungsindex besitzt, beispielsweise indem Nanopartikel in den Replizierlack eingebracht werden oder ein entsprechender Replizierlack mit hohem Brechungsindex verwendet wird. Weiter ist es auch möglich, die oben ausgeführten Varianten miteinander zu kombinieren und so beispielsweise eine HRI-Schicht und eine Metallschicht auf der Oberfläche der Replizierschicht vorzusehen. Weiter ist es auch möglich, dass die Reflexionsschicht bzw. die optische Trennschicht jeweils nur bereichsweise musterförmig auf der ersten Oberfläche der Replizierschicht aufgebracht ist. Durch entsprechende musterförmige Aufbringung von ein oder mehreren der oben angeführten Beschichtungen oder entsprechende musterförmige Aufbringung oder Dotierung der Replizierschicht ist es hierbei insbesondere möglich, den für den ersten bzw. zweiten optischen Abstand maßgeblichen Brechungsindex bereichsweise zu verändern und so die bereits oben beschriebenen Effekte zu erzielen.

Bei dem Folienelement handelt es sich vorzugsweise um eine Laminierfolie oder eine Transferfolie, die weiter eine Trägerfolie aufweist, die auf seiten der der ersten Oberfläche abgekehrten zweiten Oberfläche der Replizierschicht angeordnet ist. Weiter ist es auch möglich, dass das Folienelement derart auf einem Trägersubstrat eines Sicherheitsdokuments angeordnet ist, dass es eine fensterförmige Durchbrechung des Trägersubstrats zumindest teilweise überdeckt. Wie bereits oben ausgeführt, kann der von dem Folienelement generierte optische Effekt bei entsprechender Ausgestaltung nicht nur in Reflexion sondern auch in Transmission von dem menschlichen Beobachter betrachtet werden, so dass sich hierdurch ein Sicherheitsmerkmal mit hohem Nachahmungsschutz ergibt.

Im Folgenden wird die Erfindung anhand von mehreren Ausführungsbeispielen der Erfindung und anhand anderer Folienelementen unter Zuhilfenahme der beiliegenden Zeichnungen beispielhaft erläutert.
- Fig. 1: zeigt eine Draufsicht auf ein Sicherheitselement mit einem erfindungsgemäßen Folienelement.
- Fig. 2: zeigt einen Querschnitt des Folienelements nach Fig. 1.
- Fig. 3: zeigt eine schematische, nicht maßstabsgetreue Schnittdarstellung eines Bereiches des Folienelements nach Fig. 2.
- Fig. 4: zeigt eine Draufsicht auf einen Bereich des Folienelements nach Fig. 2.
- Fig. 5: zeigt eine schematische, nicht maßstabsgetreue Schnittdarstellung eines erfindungsgemäßen Folienelements für ein weiteres Ausführungsbeispiel der Erfindung.
- Fig. 6a: zeigt eine Draufsicht eines Bereichs eines erfindungsgemäßen Folienelements bei einer ersten Licht-Einfallsrichtung.
- Fig. 6b: zeigt eine Draufsicht des Folienelements nach Fig. 6a bei einer zweiten Licht-Einfallsrichtung.
- Fig. 7a: zeigt eine Draufsicht auf einen Bereich eines erfindungsgemäßen Folienelements bei einer ersten Licht-Einfallsrichtung.
- Fig. 7b: zeigt eine Draufsicht auf den Bereich nach Fig. 7a bei einer zweiten Licht-Einfallsrichtung.
- Fig. 8a: zeigt eine Draufsicht auf einen Bereich eines erfindungsgemäßen Folienelements bei einer ersten Licht-Einfallsrichtung.
- Fig. 8b: zeigt eine Draufsicht auf den Bereich nach Fig. 8a bei einer zweiten Licht-Einfallsrichtung.
- Fig. 9a: zeigt eine Draufsicht auf einen Bereich eines erfindungsgemäßen Folienelements bei einer ersten Licht-Einfallsrichtung.
- Fig. 9b: zeigt eine Draufsicht auf den Bereich nach Fig. 9a bei einer zweiten Licht-Einfallsrichtung.
- Fig. 10a: zeigt eine Draufsicht auf einen Bereich eines erfindungsgemäßen Folienelements bei einer ersten Licht-Einfallsrichtung.
- Fig. 10b: zeigt eine Draufsicht auf den Bereich nach Fig. 10a bei einer zweiten Licht-Einfallsrichtung.
- Fig. 11: zeigt eine Draufsicht auf einen Bereich eines erfindungsgemäßen Folienelements für ein weiteres Ausführungsbeispiel der Erfindung.
- Fig. 12: zeigt eine Draufsicht auf einen Bereich eines erfindungsgemäßen Folienelements für ein weiteres Ausführungsbeispiel der Erfindung.
- Fig. 13: zeigt eine Draufsicht auf einen Bereich eines erfindungsgemäßen Folienelements für ein weiteres Ausführungsbeispiel der Erfindung.

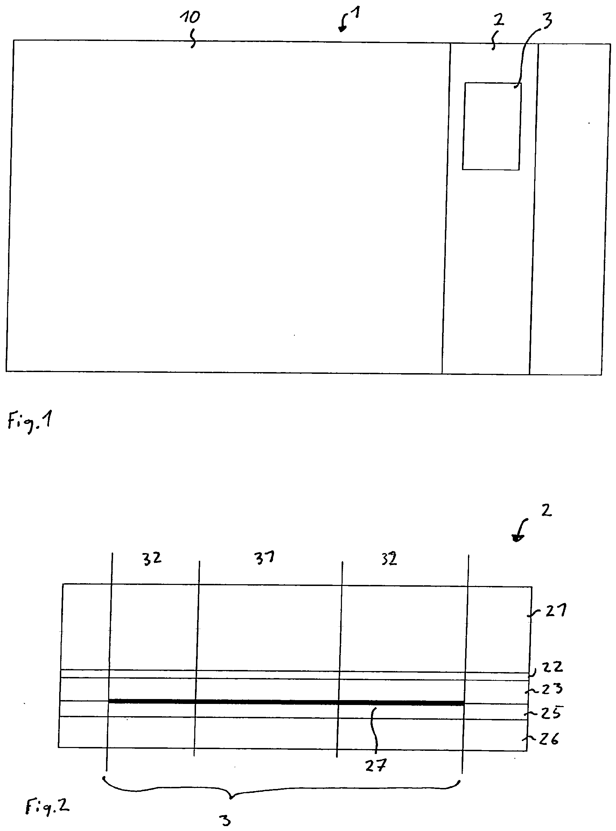

Fig. 1 zeigt ein Sicherheitsdokument 1 mit einem Trägersubstrat 10 und einem auf dem Trägersubstrat 10 applizierten Folienelement 2. Bei dem Sicherheitsdokument 1 handelt es sich beispielsweise um eine Banknote, ein Geldersatzmittel, um ein Identifikationsdokument oder um ein Zertifikat, Label oder Etikett, beispielsweise für den Produktschutz. Es ist weiter auch möglich, dass es sich bei dem Sicherheitsdokument 1 um eine Kreditkarte, Bankkarte oder dergleichen handelt. Weiter ist es auch möglich, dass das Folienelement auf ein Verpackungsmaterial oder eine Umverpackung für ein Produkt oder auf dem Produkt selbst appliziert ist.

Das Trägersubstrat 10 besteht vorzugsweise aus einem Papiersubstrat, beispielsweise einer Dicke zwischen 50 und 100 µm. Es ist jedoch auch möglich, dass das Trägersubstrat 10 aus einem Kunststoffmaterial oder aus einem Verbundwerkstoff aus einer oder mehreren Papier- und/oder Kunststoff-Lagen besteht. Das Trägersubstrat 10 ist weiter vorzugsweise mit einer oder mehreren Farbschichten bedruckt, und mit einem oder mehreren weiteren Sicherheitselementen versehen. Wie in Fig. 1 angedeutet, ist das Folienelement 2 streifenförmig ausgeformt und über die gesamte Breite des Trägersubstrats geführt. Es ist jedoch auch möglich, dass das Folienelement 2 patch-förmig ausgeformt ist oder auch nicht über die gesamte Breite des Trägersubstrats 10 geführt ist. Das Folienelement 2 weist einen Bereich 3 auf, in dem in eine Replizierschicht des Folienelements 2 eine optische wirksame Oberflächenstruktur abgeformt ist. Vorzugsweise ist der Bereich 3 hierbei innerhalb einer in das Trägersubstrat 10 eingebrachten fensterförmigen Durchbrechung angeordnet oder überdeckt eine solche Durchbrechung zumindest teilweise.

Weiter ist es auch möglich, dass das Folienelement 2 neben dem Bereich 3 noch einen oder mehrere weitere Bereiche aufweist, in denen weitere optische Sicherheitsmerkmale für den Betrachter generiert werden und welche beispielsweise ebenfalls eine in eine Replizierschicht des Folienelements 2 abgeformte optisch wirksame Oberflächenstruktur, ein Dünnfilm-Schichtsystem, eine vernetzte Flüssigkristallschicht und/oder eine Schicht enthaltend optisch variable Pigmente aufweist. Wie bereits oben erläutert, können so Bereiche geschaffen werden, in denen unterschiedliche Farbeffekte zur Generierung eines Sicherheitsmerkmals zusammenwirken, beispielsweise in Form von selbstreferenzierenden Farbflächen. Weiter ist es auch möglich, dass das Folienelement 2 weiter noch ein oder mehrere Farbschichten aufweist, die beispielsweise in Form eines Logos oder eines Bildes ausgeformt sind und neben oder in Überlappung zu dem Bereich 3 vorzugsweise zur Ausbildung eines gemeinsamen Sicherheitsmerkmals vorgesehen sind.

Im Folgenden wird der Aufbau des Folienelements 2 anhand der Figuren Fig. 2 bis Fig. 4 erläutert.

Bei dem Folienelement 2 kann es sich um einen Abschnitt einer auf dem Trägersubstrat 10 applizierten Laminierfolie oder um einen Abschnitt einer Übertragungslage einer Transferfolie handeln, welcher auf dem Trägersubstrat 10 abgeprägt worden ist.

Das Folienelement 2 weist eine Trägerfolie 21, eine optionale Haft-Vermittlungsschicht 22, eine Replizierschicht 23, eine Reflexionsschicht 24 und eine Schutzlackschicht 25 sowie eine Kleberschicht 26 auf. Auf die Haft-Vermittlungsschicht 22 und die Schutzlackschicht 25 könnte auch verzichtet werden. Weiter ist es auch möglich, dass das Folienelement 2 neben diesen Schichten noch eine oder mehrere weitere Schichten aufweist, die das optische Erscheinungsbild des Folienelements 2 in dem Bereich 3 verändern oder die Haftung zwischen den Schichten verbessern.

Handelt es sich bei dem Folienelement 2 um die Transferlage einer Transferfolie, so könnte auch auf die Trägerfolie 21 verzichtet werden. In diesem Falle ist es vorteilhaft, anstelle der Haft-Vermittlungsschicht 22 eine Schutzlackschicht vorzusehen. Weiter wäre in diesem Fall vorzugsweise zwischen einer Trägerfolie der Transferfolie und dem aus den Schichten 23 bis 26 bestehenden Schichtstapel noch eine Ablöseschicht vorzusehen, welche das Ablösen der Transferlage von der Trägerfolie erleichtert.

Bei der Trägerfolie 21 handelt es sich um eine Kunststofffolie, beispielsweise aus PET oder BOPP, einer Dicke zwischen 8 und 24 µm. Bei der Replizierschicht 23 handelt es sich um eine Schicht aus einem thermoplastischen Replizierlack oder aus einem UV-härtbaren Replizierlack, welcher eine Schichtdicke zwischen 2 und 5 µm aufweist. Weiter ist es auch möglich, dass es sich bei der Replizierschicht 23 um eine Kunststofffolie, beispielsweise um die als Trägerfolie 21 verwendete Kunststofffolie handelt.

Bei der Kleberschicht 26 handelt es sich um eine Schicht aus einem thermisch aktivierbaren Heißkleber. Es ist jedoch auch möglich, dass die Kleberschicht 26 aus einem Kaltkleber oder aus einem UV-aktivierbaren Kleber besteht.

Im Bereich 3 ist in die Replizierschicht 23 eine optisch wirksame Oberflächenstruktur 27 abgeformt. Das Abformen der Oberflächenstruktur 27 erfolgt hierbei vorzugsweise mittels thermischer Replikation, indem ein beheiztes Prägewerkzeug, beispielsweise eine Prägewalze, gegen die in Richtung der Kleberschicht 26 orientierte Oberfläche der Replizierschicht 23 gepresst wird und so mittels Hitze und Druck die Oberflächenstruktur 27 in dem Bereich 3 in diese Oberfläche der (thermoplastischen) Replizierschicht 23 eingebracht wird. Weiter ist es auch möglich, dass die Oberflächenstruktur 27 mittels UV-Replikation in die Oberfläche der Replizierschicht eingebracht wird. In diesem Fall wird vorzugsweise direkt nach Aufbringen der Replizierschicht 23 mittels eines Werkzeugs die Oberflächenstruktur in die Replizierschicht 23 abgeformt und vorzugsweise parallel hierzu die Replizierschicht durch UV-Bestrahlung ausgehärtet. Weiter ist es auch möglich, dass die Oberflächenstruktur 27 mittels Ablation in die Replizierschicht 23 abgeformt wird.

Weiter ist es auch möglich, dass auf die Replizierschicht weiter bereichsweise ein HRI-Material, beispielsweise musterförmig durch ein Druckverfahren, aufgebracht ist. Weiter ist es möglich, dass die Oberflächenstruktur 27 für die Durchlichtbetrachtung ausgelegt ist und so zumindest im Bereich 3 eine fensterförmige Durchbrechung in dem Substrat 10 vorgesehen ist bzw. das Substrat 10 in diesem Bereich transparent ausgebildet ist.

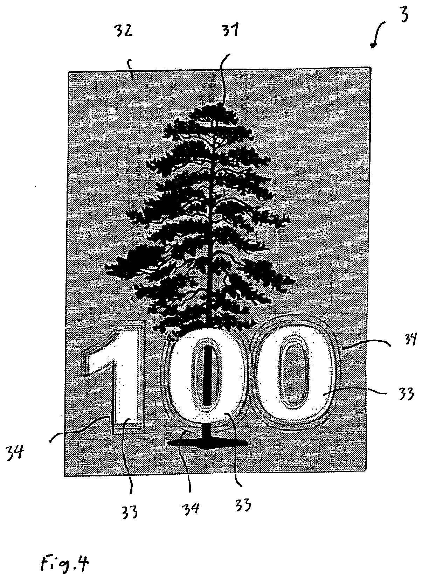

Der Bereich 3 ist in mehrere Bereiche 31, 32, 33 und 34 unterteilt, in denen die Oberflächenstruktur 27 jeweils von einem unterschiedlichen Oberflächenrelief gebildet wird. So ergibt sich für den menschlichen Betrachter bei Betrachtung des Bereichs 3 dabei beispielsweise das in Fig. 4 verdeutlichte optische Erscheinungsbild. So ist der Bereich 31 beispielsweise in Form eines Baumes 31 ausgeformt und mit einem ersten Oberflächenrelief belegt, welches eine holographische Darstellung eines Baumes in grüner Farbe bewirkt. Der Bereich 32 ist in Form eines Hintergrundes zu dem Bereich 31 ausgeformt und umschließt den Bereich 31 vollständig. In dem Bereich 32 wird die Oberflächenstruktur 27 von einem zweiten Oberflächenrelief gebildet, welches einen holographisch wirkenden Hintergrund zu der holographischen Darstellung, die durch den Bereich 31 bewirkt wird, generiert, und zwar in einer zu dem Bereich 31 kontrastierenden Farbe, beispielsweise in blauer Farbe. Die Bereiche 33 sind in Form von Symbolen, hier in Form der Ziffern "100", ausgeformt. In den Bereichen 33 wird die Oberflächenstruktur 27 von einem dritten Oberflächenrelief gebildet, welches die Bereiche 33 von einer zentralen Betrachtungsposition aus achromatisch weiß erscheinen lässt. Die Bereiche 34 umschließen jeweils die Bereiche 33 und bilden jeweils einen Randbereich zu den Bereichen 33 aus. In den Bereichen 34 wird die Oberflächenstruktur 27 von einem vierten Oberflächenrelief gebildet, welches von einer zentralen Betrachtungsposition aus in Regenbogenfarben erscheint und bei Verdrehen des Sicherheitselements 2 einen im wesentlichen achromatischen Bewegungseffekt simuliert, durch den die Ziffern "100" sich beim Verdrehen zu verbreitern und wieder zusammen zu ziehen scheinen.

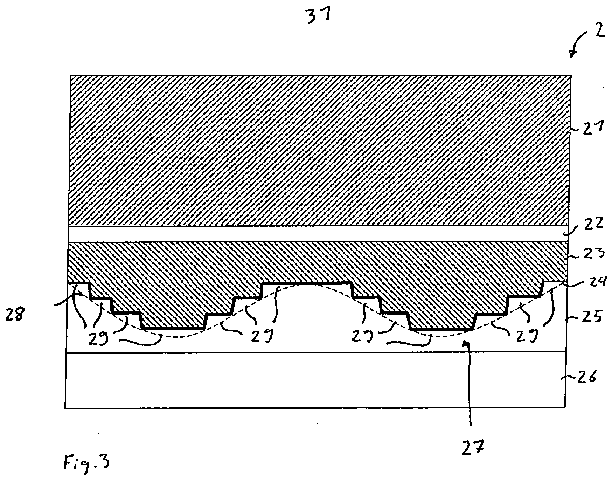

Der Aufbau des ersten Oberflächenreliefs, welcher in dem Bereich 31 abgeformt ist, wird nun im Folgenden beispielhaft anhand von Fig. 3 erläutert.

Fig. 3 zeigt eine nicht maßstabsgetreue Darstellung eines Schnitts durch das Folienelement 2 in einem Teilbereich des Bereichs 31. Fig. 3 zeigt das Folienelement 2 mit der Trägerfolie 21, der Haft-Vermittlungsschicht 22, der Replizierschicht 23, der Reflexionsschicht 24, der Schutzlackschicht 25 und der Kleberschicht 26. Hierbei ist es auch möglich, dass auf die Schutzlackschicht 25 verzichtet wird oder die Schutzlackschicht 25 und die Kleberschicht 26 aus demselben Material bestehen. Die Oberflächenstruktur 27 wird in dem Bereich 31 von einem diffraktiven Oberflächenrelief gebildet, welches - wie in Fig. 3 dargestellt ist - aus einer Vielzahl aufeinander folgender, einer Hüllkurve 28 folgender Elemente besteht, welche jeweils aus einer im wesentlichen parallel zu einer Grundfläche angeordneten Elementflächen 29 und mindestens einer an die benachbarten Elementflächen 29 anschließenden Flanke bestehen. Die Elementflächen 29 sind demnach im Wesentlichen parallel zueinander angeordnet. Die Grundfläche ist in dem Ausführungsbeispiel nach Fig. 3 - wie in Fig. 3 gezeigt - parallel zu der Unterseite der Replizierschicht 23 und damit parallel zu der Unterseite des Folienelements 2 und parallel zur Trägerfolie 21 ausgerichtet. Es ist jedoch auch möglich, dass die Grundflächen und damit die Elementflächen 29 einen Neigungswinkel mit der Unterseite der Replizierschicht 25 einschließen, wodurch weitere optische Effekte bewirkt werden können, wie unten erläutert.

Die optische Tiefe der Hüllkurve beträgt hierbei vorzugsweise das 3- bis 4-fache des optischen Abstands zwischen den Elementflächen. Der optische Abstand zwischen den im Wesentlichen parallel zueinander angeordneten Elementflächen wird hierbei wie üblich bestimmt, d.h. durch die Beabstandung entlang der auf den Elementflächen senkrecht stehenden Flächennormalen. Die Hüllkurve 28, die in Fig. 3 durch eine gestrichelte Linie verdeutlicht ist, weist in diesem Ausführungsbeispiel eine Spatialfrequenz zwischen 100 L/mm und 1000 L/mm auf und beugt so das Licht vorwiegend in die erste oder minus-erste Beugungsordnung. Die Strukturelemente der Hüllkurve 28 bzw. deren lokale Ausrichtung und lokale Spatialfrequenz innerhalb des oben beschriebenen Spatialfrequenz-Bereichs sind hierbei so gewählt, dass sie - wie oben beschrieben - eine holographische Darstellung eines Baumes generieren. Bei der Hüllkurve 28 handelt es sich um ein Reliefprofil, beispielsweise ein Regenbogen-Hologramm, ein holographisches Gitter, das durch die Interferenz von zwei oder mehr Lichtstrahlen erzeugt ist, ein holographisches Gitter, das durch Interferenz eines Referenzstrahls und eines von einem Objekt reflektierten Strahls generiert ist, oder um ein Hologramm, das durch optisches Kopieren von einem Master-Hologramm erzeugt ist. Weiter kann es sich bei diesem Reliefprofil auch um eine mathematische Funktion handeln, welche solch ein holographisches Reliefprofil repräsentiert und welche dazu verwendet wird, die letztendlich mittels Elektronenstrahl-Lithographie umgesetzte Oberflächenstruktur zu berechnen. Bei der Hüllkurve 28 in dem Ausführungsbeispiel nach Fig. 3 handelt es sich so beispielsweise um ein Reliefprofil, welches einem Regenbogen-Hologramm, beispielsweise einem computer-generierten Hologramm (beispielsweise Dot-Matrix-Hologramm) eines Baumes entspricht. Das für die Hüllkurve verwendete Reliefprofil wird weiter gegenüber dem üblichen Reliefprofil eines Regenbogen-Hologramms dahingehend modifiziert, dass es in der senkrecht zur Grundebene liegenden Richtung um den Faktor 3 bis 10 gestreckt wird, so dass die Hüllkurve nicht mehr eine Profiltiefe zwischen 0,1 und 0,3 µm, wie bei einem üblichen Regenbogen-Hologramm, sondern eine deutlich höhere Profiltiefe zwischen 1 und 2 µm aufweist. Wie in Fig. 3 dargestellt, ist die Hüllkurve 28 weiter durch die Elementflächen 29 substrukturiert, wodurch weiter der Farbwert des gebeugten Lichts durch Interferenz beeinflusst wird. Die Elementflächen 29 sind hierbei in einem ersten optischen Abstand oder einem Vielfachen des ersten optischen Abstands voneinander beabstandet, wobei der sich durch Division durch den Brechungsindex ergebende erste geometrische Abstand zwischen 50 nm und 400 nm, vorzugsweise zwischen 80 nm und 200 nm beträgt und in diesem Ausführungsbeispiel 80 nm für einen blauen Farbton, bei Vorsehen einer ZnS-Schicht, 220 nm für einen roten Farbton in normalem Kunststoff und 325 nm für einen roten Farbton bei Ausführungen gegen Luft beträgt.

Das in dem Bereich 32 abgeformte zweite Oberflächenrelief ist ähnlich wie das anhand von Fig. 3 verdeutlichte erste Oberflächenrelief ausgeformt, mit dem Unterschied, dass die Hüllkurve 28 von einem Reliefprofil gebildet wird, welches durch Beugung in die ± erste Beugungsordnung die oben erläuterte holographische Hintergrundinformation generiert. Im weiteren unterscheidet sich die Substrukturierung der Hüllkurve von der des ersten Oberflächenreliefs dahingehend, dass die Elementflächen in einem unterschiedlichen optischen Abstand, hier beispielsweise in einem optischen Abstand von 325 nm voneinander beabstandet sind und so der Farbwert des gebeugten Lichts durch Interferenz in einer anderen Weise beeinflusst wird, wodurch sich der unterschiedliche Farbeindruck der Bereiche 31 und 32 ergibt.

Bei dem dritten Oberflächenrelief, welches in den Bereichen 33 abgeformt ist, handelt es sich um eine Mattstruktur oder um ein Blaze-Gitter, beispielsweise mit einer Spatialfrequenz von 1000 L/mm und einer im Wesentlichen dreieckförmigen Profilform.

Bei dem vierten Oberflächenrelief, welches in den Bereichen 34 abgeformt ist, handelt es sich um ein Kinegram®, welches den oben beschriebenen Bewegungseffekt bewirkt.

Die Oberflächenstruktur 27 zeichnet sich so vor allem dadurch aus, dass sie in den Bereichen 31 bis 34 von gänzlich unterschiedlichen Oberflächenreliefen gebildet wird, die sich insbesondere in ihrer Profiltiefe deutlich voneinander unterscheiden. So weist die Oberflächenstruktur 27 in den Bereichen 31 oder 32 ein Oberflächenrelief mit einer optisch wirksamen Relieftiefe zwischen 1 und 2 µm auf, wohin gegen die Oberflächenstruktur 27 in den Bereichen 33 und 34 eine optisch wirksame Relieftiefe zwischen 0,1 und 0,3 µm aufweist.

Es wird ein einziges Replizierwerkzeug verwendet, um die Oberflächenstruktur 27 in die Replizierschicht 23 abzuformen. Zur Herstellung des Replizierwerkzeugs wird das Oberflächenrelief 27 entsprechend der oben dargelegten Grundsätze berechnet und sodann in eine Trägerschicht, beispielsweise eine dünne Glasschicht, mittels Elektronenstrahl-Lithographie eingebracht.

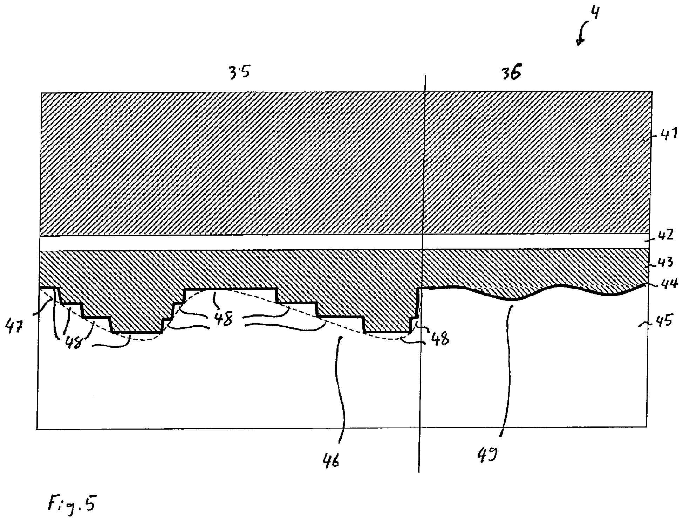

Ein weiteres Ausführungsbeispiel der Erfindung wird nun anhand von Fig. 5 erläutert.

Fig. 5 zeigt eine nicht maßstabsgetreue Schnittdarstellung eines Teilbereichs eines Folienelements 4. Das Folienelement 4 wird in dem Ausführungsbeispiel nach Fig. 5 von einer Transferfolie, insbesondere einer Heißprägefolie, gebildet. Es ist jedoch auch möglich, dass es sich bei dem Folienelement 4 um eine Laminierfolie oder um einen auf ein Trägersubstrat applizierten Teil einer Laminier- oder Transferfolie handelt. Das Folienelement 4 weist eine Trägerschicht 41, eine Ablöse- und/oder Schutzlackschicht 42, eine Replizierschicht 43, eine Reflexionsschicht 44 und eine Kleberschicht 45 auf. Bei der Trägerfolie 41 handelt es sich um eine Kunststofffolie, beispielsweise um eine PET-Folie einer Dicke zwischen 12 und 56 µm. Die Replizierschicht 43 besteht, wie oben bereits in Bezug auf die Replizierschicht 23 erläutert, aus einer Replizierlackschicht aus einem thermoplastischen Lack oder einem UV-härtbaren Lack. Bei der Reflexionsschicht 44 handelt es sich um eine dünne metallische Schicht, beispielsweise aus Aluminium, Silber, Gold. Kupfer oder aus einer Legierung dieser Metalle. Weiter ist es auch möglich, dass anstelle der Reflexionsschicht 44 eine optische Trennschicht, beispielsweise eine HRI-Schicht, insbesondere eine anorganische HRI-Schicht (HRI = High Refraction Index) auf die Replizierschicht 43 aufgebracht wird, welche eine Dicke aufweist, die in einer ersten Ausführungsform geringer als der erste und/oder zweite optische Abstand und in einer zweiten Ausführungsform dicker als der erste und/oder zweite optische Abstand ist oder diesem entspricht. Weiter ist es auch möglich, dass die Reflexionsschicht 44 aus einer HRI-Schicht und einer metallischen Schicht besteht, wobei vorzugsweise die Replizierschicht 43 zuerst mit der HRI-Schicht beschichtet wird und sodann die die Metallschicht auf die HRI-Schicht aufgebracht wird.

Sowohl die Reflexionsschicht 44 als auch die optische Trennschicht können hierbei partiell und musterförmig auf die Replizierschicht 43 aufgebracht sein. Hierdurch wird beispielsweise erreicht, dass das Licht in unterschiedlichen Bereichen ein Medium mit unterschiedlichem Brechungsindex durchläuft und sich so der von dem Brechungsindex abhängige optische Abstand bereichsweise unterscheidet.

Fig. 5 zeigt nun weiter jeweils einen Teilbereich zweier aneinander grenzender Bereiche 35 und 36. In den Bereichen 35 und 36 sind in die Replizierschicht 43 zwei unterschiedliche Oberflächenreliefs, nämlich ein Oberflächenrelief 46 und ein Oberflächenrelief 49, abgeformt. Wie in Fig. 5 angedeutet wird das Oberflächenrelief 46 von einer Vielzahl aufeinander folgender, einer Hüllkurve 47 folgender Elemente gebildet, welche jeweils aus einer im wesentlichen parallel zu einer Grundfläche angeordneten Elementfläche 48 und mindestens einer an die benachbarte Elementfläche 48 oder benachbarten Elementflächen 48 anschließenden Flanke besteht. Bei der Hüllkurve 47 handelt es sich um eine asymmetrische Hüllkurve, d.h. die Strukturelemente, aus denen sich die Hüllkurve 47 zusammensetzt, haben einen asymmetrischen Querschnitt. Im einfachsten Fall handelt es sich bei der Hüllkurve 47 um ein regelmäßiges, aus dreieckförmigen Strukturelementen zusammengesetztes Gitter mit einer Spatialfrequenz zwischen 100 L/mm und 2000 L/mm, vorzugsweise zwischen 100 L/mm und 1000 L/mm, und einem Symmetriefaktor im Bereich von 70 % bis 100 %. bevorzugt von 85 % bis 95 %. Wie in Fig. 5 angedeutet ist die Hüllkurve 47 durch die Elementflächen 48 substrukturiert, und zwar so, dass die benachbarten Elementflächen 48 in einer senkrecht zur Grundebene stehenden Richtung mit einem Abstand oder einem Vielfachen eines Abstands beabstandet sind, welcher eine optisch wirksame Tiefe zwischen 150 nm und 400 nm besitzt. So wird auch hier das von dem Oberflächenrelief 46 gebeugte Licht mit durch die Substrukturierung bewirkten Interferenz-Effekten überlagert, welche den Farbwert des von dem Oberflächenrelief gebeugten Lichts beeinflussen. Diese Art von Oberflächenrelief zeigt eine Vielzahl interessanter Eigenschaften: In Abhängigkeit von dem Betrachtungs- oder Beleuchtungswinkel innerhalb der Grundebene und u.U. in Abhängigkeit von dem Kippwinkel, d.h. dem Winkel senkrecht zur Grundebene, zeigt dieses Oberflächenrelief unterschiedliche Farben. Handelt es sich bei der Hüllkurve beispielsweise um ein eindimensionales Gitter, so wird der Farbeindruck von der Winkellage zu dem Azimutwinkel des Gitters bestimmt. Weiterhin zeichnet sich diese Art von Oberflächenrelief durch eine besonders hohe Lichtstärke und Trennschärfe zwischen den bei den verschiedenen Winkellagen generierten Farbwerten aus, die bei weitem höher als die durch ein monochromatisches Volumen-Hologramm erzielbaren Werte liegen.

So ist es beispielsweise möglich, dass das Oberflächenrelief 46 beugungsoptische eine holographische Darstellung eines Objekts, beispielsweise ein Portrait, zeigt, wobei durch die oben geschilderten Effekte in der ersten und minus-ersten Beugungsordnung das von dem Oberflächenrelief 46 gebeugte Licht unterschiedliche Farbwerte aufweist und so das Objekt bei Drehung um 180° weiter auch seinen Farbwert ändert. Ein solcher Effekt ist durch ein Volumen-Hologramm nicht erzielbar.

An das Oberflächenrelief 46 schließt das Oberflächenrelief 49 an, welches in dem Bereich 36 in die Replizierschicht 43 abgeformt ist. Bei dem Oberflächenrelief 49 handelt es sich um ein optisch wirksames Oberflächenrelief, welches nicht durch Elementflächen substrukturiert ist. Es handelt sich bei dem Oberflächenrelief 49 somit um ein Beugungsgitter, um eine Hologramm oder auch um ein achromatisches Oberflächenrelief, beispielsweise eine Mattstruktur, eine Makrostruktur oder ein Blaze-Gitter. Wie in Fig. 5 angedeutet, unterscheidet sich hierbei die Relieftiefe des Reliefprofils 49 und des Reliefprofils 46 deutlich voneinander.

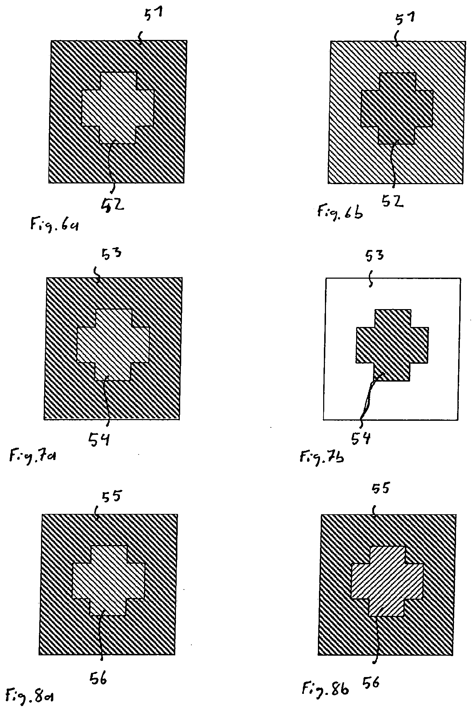

Bereits bei der Auswahl von einfachen Reliefprofilen für die Hüllkurve 47 könneninsbesondere bei Kombination mit gleichartigen Strukturen oder mit Reliefstrukturen, die der Reliefstruktur 49 entsprechen - interessante optische Effekte realisiert werden:
So zeigen die Figuren Fig. 6a und Fig. 6b eine Draufsicht auf einen Abschnitt eines Folienelements, wobei in einem Bereich 51 ein erstes Oberflächenrelief und in dem Bereich 52 ein zweites Oberflächenrelief in eine Replizierschicht abgeformt ist. Das erste und zweite Oberflächenrelief sind wie das Oberflächenrelief 46 nach Fig. 5 ausgeformt. Als Hüllkurve 47 wird ein eindimensionales Gitter verwendet. Die Oberflächenreliefs in den Bereichen 51 und 52 unterscheiden sich nur dahingehend voneinander, dass die Azimutwinkel ihrer Hüllkurven um 180° gegeneinander verdreht sind. Die Hüllkurven sind so beispielsweise durch folgende geometrische Faktoren gekennzeichnet: Asymmetrisches Beugungsgitter (Symmetriefaktor: 100 %) mit einer Periode von 4 µm (250 L/mm). Der Abstand zwischen den Elementflächen beträgt 190 nm (optischer Abstand 285 nm; Brechungsindex der Replizierschicht: 1,5). Die geometrische Profiltiefe des Oberflächenreliefs beträgt 1,14 µm, d.h. das 6-fache des geometrischen Abstands. Bei Betrachtung von einer Standard-Betrachtungsposition aus (Fig. 6a) erscheint der Bereich 52 in roter Farbe und der Bereich 51 in grüner Farbe. Wird das Folienelement um 180° gedreht (Fig. 6b) so erscheint der Bereich 52 für den menschlichen Betrachter in grüner Farbe und der Bereich 51 in roter Farbe.

In dem Ausführungsbeispiel nach den Figuren Fig. 7a und Fig. 7b sind in den Bereichen 53 und 54 eines Folienelements unterschiedliche Oberflächenprofile abgeformt, welche jeweils wie das Oberflächenprofil 46 ausgeformt sind. Die Hüllkurven des in den Bereich 54 abgeformten Oberflächenprofils ist ein einfaches lineares Gitter, welche sich aus asymmetrischen Strukturelementen, beispielsweise dreieckförmigen Strukturelementen, zusammensetzen. Die Hüllkurve des im Bereich 53 abgeformten Oberflächenreliefs ist die einer anisotropen, vorzugsweise holographisch erzeugten Mattstruktur, deren Strukturelemente ebenfalls eine asymmetrische Formgebung besitzen und die das einfallende Licht gerichtet streut. Die Hüllkurven schließen einen Azimutwinkel von 0° ein. Der optische Abstand zwischen den Elementflächen beträgt im Bereich 54 285 nm (geometrischer Abstand 190 nm). Der optische Abstand zwischen den Elementflächen beträgt im Bereich 53 ca. 315 nm (geometrischer Abstand 210 nm).

Bei Betrachtung aus der Standard-Betrachtungsposition (Fig. 7a) erscheint der Bereich 54 in roter Farbe, wohin gegen der Bereich 53 in grüner Farbe erscheint. Bei Drehung des Folienelements um 180° erscheint der Bereich 54 in grüner Farbe, wohin gegen der Bereich 53 farblos erscheint.

Fig. 8a und Fig. 8b zeigen ein weiteres Ausführungsbeispiel eines erfindungsgemäßen Folienelements, wobei hier in einem Bereich 55 ein Reliefprofil nach Fig. 3 mit einer symmetrischen Hüllkurve und in einem Bereich 56 ein Reliefprofil nach Fig. 5 mit einer asymmetrischen Hüllkurve abgeformt ist. Die Hüllkurve des Reliefprofils im Bereich 55 ist beispielsweise durch folgende geometrische Parameter definiert:
Zweidimensionales beugungsoptisches Gitter (symmetrisches Beugungsgitter mit einer Periode von 4 µm (250 L/mm), beispielsweise ein Kreuzgitter, ein Gitter mit kreisförmigen oder hexagonalen Gitterlinien.

Der geometrische Abstand der Elementflächen im Bereich 55 beträgt 195 nm (optischer Abstand 290 nm) bei einer geometrischen Strukturtiefe von 780 nm, d.h. dem 4-fachen des geometrischen Abstands.

Die Hüllkurve des Reliefprofils im Bereich 56 ist ein symmetrisches Beugungsgitter mit einer Periode von 4 µm (250 L/mm). Der geometrische Abstand der Elementflächen im Bereich 56 beträgt 81 nm (optischer Abstand 270 nm) bei einer geometrischen Strukturtiefe von 720 nm, d.h. dem 4-fachen des geometrischen Abstands.

Bei Betrachtung aus einer Standard-Betrachtungsposition (Fig. 8a) erscheint der Bereich 56 rot und der Bereich 55 grün. Bei Drehung des Folienelements um 180° erscheint der Bereich 56 blau und der Bereich 55 erscheint weiter in grün.

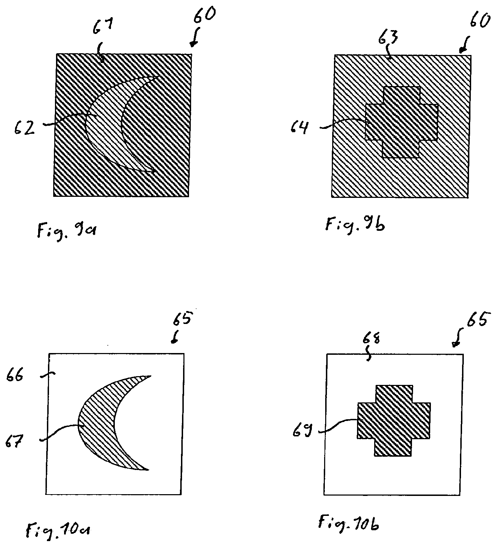

Die Figuren Fig. 9a und Fig. 9b zeigen einen Bereich 60 eines weiteren erfindungsgemäßen Folienelements. Bei einer Standard-Betrachtungsposition (Fig. 9a) erscheint dem menschlichen Betrachter ein Bereich 62 in roter Farbe und ein Bereich 61 in grüner Farbe. Bei Drehung des Folienelements um 90° erscheint ein Bereich 64 in roter Farbe und ein Bereich 63 in grüner Farbe. Wie in den Fig. 9a und Fig. 9b dargestellt, unterscheidet sich hierbei die Formgebung der Bereiche 61 und 63 bzw. 62 und 64.

Dies wird dadurch realisiert, dass der Bereich 60 in eine Vielzahl von Domänen unterteilt ist, die sich jeweils über die gesamte Länge des Bereichs 60 erstrecken und die jeweils eine Breite von 100 µm besitzen. Weiter sind die Domänen jeweils in einen ersten Teilbereich und einen zweiten Teilbereich unterteilt, die sich ebenfalls jeweils über die gesamte Länge des Bereichs 60 erstrecken. Vier unterschiedliche Reliefprofile sind hierbei in dem Bereich 60 in die Replizierschicht des Folienelements abgeformt: Zum einen ein erstes Reliefprofil, welches dem Reliefprofil nach Fig. 3 entspricht und eine symmetrische Hüllkurve aufweist. Die Hüllkurve des ersten Reliefprofils wird hier von einem linearen Gitter mit einer Spatialfrequenz von 200 L/mm (5 µm Periode) und einer (geometrischen) Profiltiefe von 733 nm gebildet (4-fache des geometrischen Abstands). Der optische Abstand zwischen den Elementflächen beträgt 275 nm (geometrischer Abstand 182 nm bei Brechungsindex 1,5) . Das zweite Reliefprofil unterscheidet sich lediglich dahingehend gegenüber dem ersten Reliefprofil, dass der Azimutwinkel des zweiten Reliefprofils um 90° gegenüber dem des ersten Reliefprofils verdreht ist. Das dritte Reliefprofil unterscheidet sich lediglich dahingehend gegenüber dem ersten Reliefprofil, dass der geometrische Abstand zwischen den Elementflächen 220 nm beträgt. Das vierte Reliefprofil unterscheidet sich lediglich dahingehend gegenüber dem dritten Reliefprofil, dass der Azimutwinkel des dritten Reliefprofils gegenüber dem Azimutwinkel des vierten Reliefprofils um 90° verdreht ist.

In den Bereichen der ersten Unterbereiche der Domänen, welche sich mit dem Bereich 61 überschneiden, ist das erste Reliefprofil in die Replizierschicht abgeformt. In den Bereichen der ersten Unterbereiche der Domänen, welche sich mit dem Bereich 62 überschneiden, ist das dritte Reliefprofil in die Replizierschicht abgeformt. In den Bereichen der zweiten Unterbereiche der Domänen, welche sich mit dem Bereich 63 überschneiden, ist das vierte Reliefprofil in die Replizierschicht abgeformt. In den Bereichen der zweiten Unterbereiche der Domänen, welche sich mit dem Bereich 64 überschneiden, ist das zweite Reliefprofil in die Replizierschicht abgeformt.

Weiter ist es auch möglich, dass die Domänen sich nicht über die gesamte Länge sondern über die gesamte Breite des Bereichs 60 erstrecken und/oder dass die Breite der Domäne anders gewählt ist, wobei die Breite der Domäne zwischen 300 µm und 10 µm zu wählen ist.

Fig. 10a und Fig. 10b zeigen einen Bereich 65 eines weiteren erfindungsgemäßen Folienelements. Der Bereich 65 ist wie der Bereich 60 nach Fig. 9a und Fig. 9b ausgebildet, mit dem Unterschied, dass lediglich in den Bereichen der ersten Unterbereiche der Domänen, welche sich mit einem Bereich 67 überschneiden, das erste Reliefprofil in die Replizierschicht abgeformt ist und in den Bereichen der Domänen, welche sich mit einem Bereich 69 überschneiden das vierte Reliefprofil in die Replizierschicht abgeformt ist. Bei einer Standard-Betrachtungssituation (Fig. 10a) erscheint der Bereich 67 dem menschlichen Betrachter in grüner Farbe, wohingegen der Bereich 66 farblos erscheint. Wird das Folienelement um 90° gedreht (Fig. 10b), so erscheint der Bereich 69 dem menschlichen Betrachter in roter Farbe und der Bereich 68 erscheint farblos.

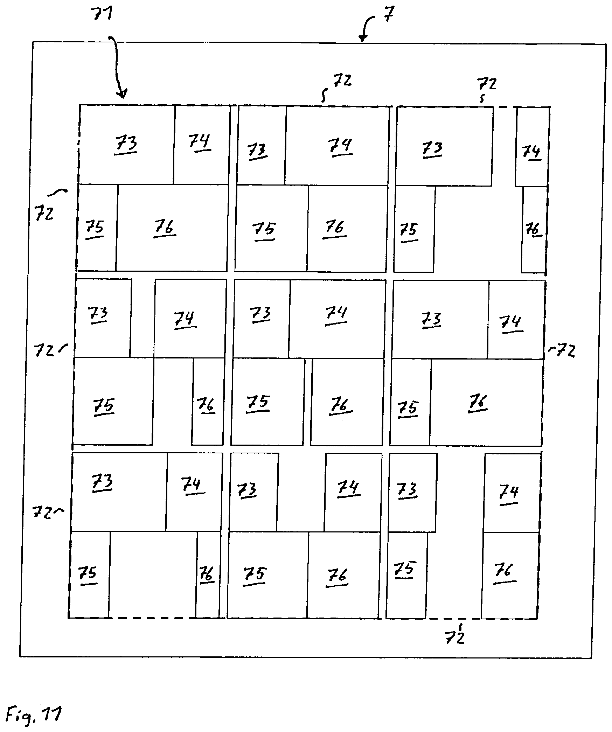

Fig. 11 verdeutlicht ein weiteres Ausführungsbeispiel der Erfindung, mittels dem ein Mehrfarben-Hologramm verwirklicht werden kann.

Fig. 11 zeigt einen Bereich 71 eines Folienelements 7. Der Bereich 71 ist in eine Vielzahl von Domänen 72 unterteilt. Die Domänen 72 besitzen vorzugsweise jeweils die gleichen Abmessungen. Zumindest in eine Richtung ist die Abmessung der Domänen 72 kleiner als 300 µm. In dem in Fig. 11 dargestellten Ausführungsbeispiel besitzen die Domänen 72 sowohl in Längsrichtung als auch in Querrichtung eine Abmessung von weniger als 300 µm, in dem in Fig. 11 dargestellten Ausführungsbeispiel eine Abmessung von 100 x 100 µm.

Die Domänen weisen jeweils einen oder mehrere der Bereiche 73, 74, 75 und 76 auf, wobei in jedem der Bereiche 73 bis 76 ein unterschiedliches Oberflächenprofil in eine Replizierschicht des Folienelements 7 abgeformt ist. Die Reliefprofile sind hierbei nach Fig. 3 ausgestaltet, wobei die Hüllkurve der Reliefprofile in den Bereichen 73 und 75 einerseits und 74 und 76 andererseits übereinstimmt. Im Weiteren unterscheidet sich jedoch der optische Abstand der Elementflächen der Oberflächenprofile in den Bereichen 73 und 75 einerseits und 74 und 76 andererseits.

Die Spatialfrequenz und der Azimutwinkel der Hüllkurven der Oberflächenreliefs in den Bereichen 73 und 75 einerseits und 74 und 76 andererseits ist hierbei so gewählt, dass das in diesen Bereichen einfallende Licht in der ersten (und minus-ersten) Beugungsordnung in unterschiedliche Richtungen gebeugt wird, so dass die von den Bereichen 73 und 75 generierte Darstellung unter einem ersten Raumwinkel und die von den Bereichen 74 und 76 generierte Darstellung unter einem zweiten, hiervon unterschiedlichen Raumwinkel sichtbar ist. Durch den Flächenanteil der Bereiche 73 und 75 in der jeweiligen Domäne wird weiter der Farbwert und die Helligkeit des jeweiligen Bildpunktes in der unter dem ersten Raumwinkel sichtbaren Darstellung bestimmt. Entsprechendes gilt für den Flächenanteil der Bereiche 74 und 76 für die unter dem zweiten Raumwinkel sichtbare Darstellung.

Weiter ist es auch möglich, dass neben den Bereichen 73 bis 76 noch weitere Bereiche in den Domänen 72 vorgesehen werden, die entweder weiteren Raumwinkeln zugeordnet sind oder die sich in der Beabstandung der Elementflächen unterscheiden.

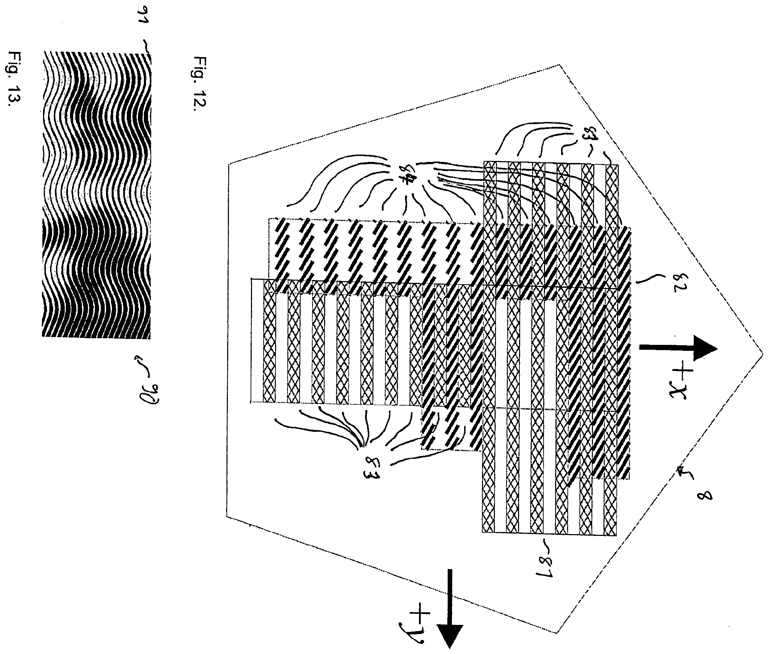

Eine weitere bevorzugte Ausführungsform der Erfindung wird nun im Folgenden anhand der Figuren Fig. 12 und Fig. 13 erläutert.

Bei diesen Ausführungsformen bestehen die ersten und/oder zweiten Bereiche aus jeweils zwei oder mehr Teilbereichen, die eine streifenförmige Formgebung besitzen. Die Flächenschwerpunktslinie eines solchen Streifens kann hierbei nicht nur eine Gerade bilden, sondern es ist auch möglich, dass die Flächenschwerpunktslinie eine sonstige Formgebung besitzt und beispielsweise eine schlangenlinienförmige Formgebung, die Formgebung einer Zickzack-Linie oder die Formgebung eines Kreisrings besitzt. Vorzugsweise beträgt die Breite des streifenförmigen Teilbereichs hierbei weniger als 300 µm und die Länge des streifenförmigen Teilbereichs ist um mindestens den Faktor 5 länger als die Breite. Weiter sind die Flächenschwerpunkte der streifenförmigen Teilbereiche vorzugsweise im Wesentlichen parallel zueinander angeordnet und gemäß einem periodischen Raster voneinander beabstandet. Die Rasterweite dieses Rasters liegt hierbei vorzugsweise auch unterhalb von 300 µm.

Fig. 12 zeigt nun ein Folienelement in Form eines Sicherheitselements 8. Das Sicherheitselement 8 weist einen ersten Bereich 81 und einen zweiten Bereich 82 auf. Der erste Bereich 81 besteht aus einer Vielzahl von Teilbereichen 83, die - wie in Fig. 12 gezeigt - eine streifenförmige Formgebung besitzen. Die streifenförmigen Teilbereiche 83 sind hierbei parallel zueinander angeordnet und ihre Flächenschwerpunktslinien sind gemäß einem periodischen Raster mit einer Rasterweite von unter 300 µm voneinander beabstandet. Die Breite der Teilbereiche 83 beträgt beispielsweise 100 µm und ihre Länge liegt im Bereich von 1 oder mehreren mm.

Der zweite Bereich 82 besteht ebenfalls aus einer Vielzahl von streifenförmigen Teilbereichen 84, welche ebenfalls gemäß einem periodischen Raster mit einer Rasterweite im Bereich vom unter 300 µm parallel zueinander angeordnet sind. Die Breite der Teilbereiche 84 beträgt beispielsweise ebenfalls ca. 100 µm und deren Länge liegt ebenfalls im Bereich von 1 oder mehreren mm.

Wie in Fig. 12 dargestellt, sind die die Bereiche 81 und 82 bildenden Teilbereiche 83 und 84 jeweils in ihrer Länge so bemessen und derart zueinander angeordnet, dass der Umriss der Bereiche 81 und 82 jeweils eine Information kodiert, hier beispielsweise den Buchstaben "T" bzw. den Buchstaben "F". Weiter sind die Teilbereiche 83 und 84 zumindest bereichsweise ineinander gerastert, sodass bereichsweise (Teil-)Abschnitte der Teilbereiche 84 zwischen (Teil-)Abschnitten der Teilbereiche 83 angeordnet sind oder umgekehrt. Der Buchstabe "T" und "F" bedecken hierbei beispielsweise einen Bereich von etwa 10 mm * 10 mm.

In den Teilbereichen 83 und 84 sind unterschiedliche diffraktive Oberflächenreliefe abgeformt, welche sich beispielsweise in ihrer Hüllkurve, in der Beabstandung ihrer Elementflächen und/oder in dem Neigungswinkel der Grundflächen gegenüber der Unterseite der Replizierschicht unterscheiden, wie bereits oben erläutert. Im Bezug auf die Ausgestaltung der in den Teilbereichen 83 und 84 vorgesehenen Oberflächenstrukturen wird auf die Ausgestaltung der Oberflächenstrukturen 27, 46 und 49 nach Fig. 3 und Fig. 5 verwiesen.

Durch die spezielle Ausgestaltung der Bereiche 81 und 82 sowie die Ineinanderrasterung der Teilbereiche 83 und 84 können viele neuartige Effekte generiert werden: So ist es beispielsweise möglich, im Bereich 81 ein Oberflächenrelief mit einer asymmetrischen Hüllkurve zu verwenden. Die Hüllkurve hat hierbei beispielsweise eine Periode von 4 µm und einen Azimut-Winkel von 0°, d.h. die abgeschrägte Flanke der Hüllkurve ist entlang der -x - Achse orientiert. Die Grundfläche, zu der die Elementflächen im Wesentlichen parallel angeordnet sind, schließt mit der Unterseite der Replizierschicht, d.h. der von der unteren Oberfläche der Replizierschicht aufgespannten Ebene, einen Winkel von etwa 10° ein. Der Abstand zwischen den Elementflächen beträgt ca. 100 nm bis 250 nm bei einem Brechungsindex von etwa 1,5, sodass der Bereich 81 grün erscheint. In dem Bereich 82 ist ein Oberflächenrelief abgeformt, welches die gleiche asymmetrische Hüllkurve besitzt, wobei jedoch die abgeschrägte Flanke der asymmetrischen Hüllkurve entlang der +x -Achse orientiert ist, d.h. einen Azimut-Winkel von 180° aufweist. Die Grundfläche, zu der die Elementflächen des Oberflächenreliefs im Wesentlichen parallel ausgerichtet sind, schließt ebenfalls einen geringen Winkel, nämlich einen Winkel von etwa 10° mit der Unterseite der Replizierschicht ein. Die Neigung der Grundfläche ist hierbei in Richtung der +x- Achse gerichtet, was auch für die in dem Bereich 81 abgeformte Reliefstruktur zutrifft. Der Abstand zwischen den Elementflächen ist hier so gewählt, dass der Bereich 82 rot erscheint, wenn er entlang der 0°-Azimut-Richtung betrachtet wird. Wenn das Sicherheitselement 8 somit von der 0°-Azimut-Richtung betrachtet wird, sieht der menschliche Betrachter ein grün erscheinendes "T". Wenn das Sicherheitselement 8 um 180° gedreht wird, sieht der menschliche Betrachter den Buchstaben "F" in roter Farbe. Ein ähnlicher Effekt zeigt sich, wenn das Sicherheitselement 8 vor und zurück geneigt wird. Wenn das Sicherheitselement 8 zum Betrachter geneigt wird, wird ein grün erscheinender Buchstabe "T" sichtbar und wenn das Sicherheitselement 8 weg vom Betrachter geneigt wird, wird ein roter Buchstabe "F" sichtbar.

Ein weiterer optischer Effekt kann dadurch realisiert werden, dass die Hüllkurve des Oberflächenreliefs im Bereich 81 wie oben beschrieben einen Azimut-Winkel vom 0° besitzt und die Hüllkurve des Oberflächenreliefs im Bereich 82 jedoch einen Azimut-Winkel von 90° aufweist (Orientierung entlang der +y- Achse). Wenn das Sicherheitselement 8 von der Standartposition (Betrachtungsrichtung entlang der 0°-Azimut-Richtung) betrachtet wird, dann wird ein grünes "T" sichtbar, wenn das Sicherheitselement 8 von der Seite (90°-Azimut-Richtung) betrachtet wird, dann wird ein rotes "F" sichtbar.

Im Weiteren ist es auch möglich, wie in der Figur Fig. 13 gezeigt, die streifenförmigen Teilbereiche 83 und 84 nicht linienförmig mit konstanter Breite auszuformen, sondern die Teilbereiche in ihrer Breite zu modulieren. So zeigt Fig. 13 einen Bereich 90 eines Sicherheitselements, welcher eine Vielzahl von Teilbereichen 91 aufweist, die in ihrer Breite moduliert sind. Die Flächenschwerpunktslinien der Teilbereiche 91 sind hierbei parallel zueinander angeordnet und verfügen über eine schlangenlinienförmige Formgebung. Die Breite der Teilbereiche 91 ist hierbei zur Ausbildung eines Graustufenbildes moduliert. In den Teilbereichen 91 ist in der Replizierschicht des Sicherheitselements ein Oberflächenrelief abgeformt, welches den bereits oben anhand der Figuren Fig. 3, 5 und 12 beschriebenen Oberflächenreliefen entspricht.

## Patentansprüche

1. Folienelement (1, 4, 7) mit einer Replizierschicht (23, 43), wobei in einer ersten Oberfläche der Replizierschicht eine optisch wirksame Oberflächenstruktur (27) abgeformt ist,
wobei die Oberflächenstruktur (27) in zumindest einem ersten Bereich (31, 35, 73) des Folienelements von einem ersten diffraktiven Oberflächenrelief (46) gebildet ist, welches aus einer Vielzahl aufeinander folgender, einer ersten Hüllkurve (28, 47) folgender Elemente besteht, wobei die Elemente jeweils aus einer im wesentlichen parallel zu einer Grundfläche angeordneten Elementfläche (29, 48) und mindestens einer an die benachbarte Elementfläche oder Elementflächen anschließenden Flanke bestehen, die Elementflächen (29, 48) benachbarter Elemente in einer senkrecht zur Grundebene stehenden Richtung beabstandet sind mit einem ersten optischen Abstand oder einem Vielfachen des ersten optischen Abstands, wobei der erste optische Abstand zwischen 150 nm und 800 nm, bevorzugt zwischen 150 nm und 400 nm beträgt und die erste Hüllkurve (28, 47) eine optische Tiefe von mehr als 450 nm aufweist, wobei die erste Hüllkurve (28, 47) eine Spatialfrequenz zwischen 100 L/mm und 2000 L/mm aufweist und die Reliefform und die Spatialfrequenz der Hüllkurve (28, 47) so gewählt ist, dass das einfallende Licht in eine oder mehrere erste Richtungen zur Darstellung einer ersten Information gebeugt wird, deren Farbwert weiter durch den ersten optischen Abstand bestimmt ist, dass die erste Hüllkurve in einer ersten Raumrichtung eine erste konstante Spatialfrequenz aufweist und dass die erste Hüllkurve in einer zweiten, zur ersten Raumrichtung unterschiedlichen zweiten Raumrichtung eine zweite konstante Spatialfrequenz aufweist, die sich von der ersten konstanten Spatialfrequenz unterscheidet, **dadurch gekennzeichnet, dass** in mindestens einem zweiten Bereich (32, 33, 34, 36, 74) die Oberflächenstruktur von einem zweiten, sich von dem ersten Oberflächenrelief unterscheidenden Oberflächenrelief (49) gebildet ist, welches eine zweite Information darstellt, wobei das zweite Oberflächenelement ein achromatisches Oberflächenrelief, insbesondere eine Mattstruktur, eine Makrostruktur oder ein Blaze-Gitter ist, und dass der erste und/oder der zweite Bereich (31, 34) musterförmig in Form einer dritten bzw. vierten Information ausgeformt ist.

2. Folienelement (4) nach Anspruch 1,
**dadurch gekennzeichnet,**
**dass** die erste Hüllkurve (47) ein asymmetrisches Reliefprofil besitzt.

3. Folienelement nach einem der vorhergehenden Ansprüche,
**dadurch gekennzeichnet,**
**dass** der erste Bereich (81, 90) von zwei oder mehr ersten Teilbereichen (83, 91) gebildet ist, die eine streifenförmige Formgebung mit einer Breite von weniger als 300 µm besitzen, dass die Flächenschwerpunkte der ersten Teilbereiche (83, 91) gemäß einem periodischen ersten Raster mit einer Rasterweite von weniger als 300 µm voneinander beabstandet sind und/oder dass die Breite der ersten Teilbereiche (91) zur Ausbildung eines Graustufenbildes variiert ist.

4. Folienelement nach einem der vorhergehenden Ansprüche,
**dadurch gekennzeichnet,**
**dass** der erste Bereich (81, 90) von zwei oder mehr ersten Teilbereichen (83, 91) gebildet ist, die eine streifenförmige Formgebung mit einer Breite von weniger als 300 µm besitzen, dass der zweite Bereich (82) von zwei oder mehr zweiten Teilbereichen (84) gebildet ist, die eine streifenförmige Formgebung mit einer Breite von weniger als 300 µm besitzen, dass die zweiten Teilbereiche (84) gemäß einem periodischen zweiten Raster mit einer Rasterweite von weniger als 300 µm voneinander beabstandet sind und zumindest bereichsweise zwischen zwei ersten Teilbereichen ein zweiter Teilbereich angeordnet ist.

5. Folienelement (2) nach einem der vorhergehenden Ansprüche,
**dadurch gekennzeichnet ,**
**dass** die erste und die zweite Information und/oder die dritte und die vierte Information sich ergänzende Informationen darstellen.

6. Folienelement nach einem der vorhergehenden Ansprüche,
**dadurch gekennzeichnet,**
**dass** die Grundfläche, zu der die Elementflächen im wesentlichen parallel ausgerichtet sind, gegenüber der der ersten Oberfläche der Replizierschicht gegenüberliegenden zweiten Oberfläche der Replizierschicht geneigt ist und vorzugsweise mit dieser einen Winkel von mehr als 5° einschließt.

## Claims

1. Film element (1,4, 7) having a replication layer (23, 43), wherein an optically effective surface structure (27) is moulded in a first surface of the replication layer, wherein the surface structure (27) is formed in at least one first region (31, 35, 73) of the film element from a first diffractive surface relief (46) which consists of a plurality of elements following one after the other and following a first envelope curve (28, 47), wherein the elements respectively consist of an element surface (29, 48), which is arranged to be substantially parallel to a base surface, and at least one flank, which is connected to the adjacent element surface or element surfaces, the element surfaces (29, 48) of adjacent elements are spaced apart in a direction perpendicular to the base plane with a first optical distance or a multiple of the first optical distance, wherein the first optical distance is between 150nm and 800nm, preferably between 150nm and 400nm and the first envelope curve (28, 47) has an optical depth of more than 450nm,
wherein
the first envelope curve (28, 47) has a spatial frequency of between 100L/mm and 2000L/mm and the relief form and the spatial frequency of the envelope curve (28, 47) are selected in such a way that incident light is diffracted in one or more first directions to depict a first piece of information, the colour value of which being further determined by the first optical distance, the first envelope curve has a first constant spatial frequency in a first spatial direction, and the first envelope curve has a second constant spatial frequency in a second spatial direction which is different to the first spatial direction, said spatial frequency differing from the first constant spatial frequency,
**characterised in that**,
in at least one second region (32, 33, 34, 36, 74), the surface structure is formed from a second surface relief (49) which is different to the first surface relief, said second surface relief (49) depicting a second piece of information, wherein the second surface element is an achromatic surface relief, in particular a matt structure, a macro structure or a blazed grating, and the first and/or the second region (31, 34) is designed in a patterned manner in the form of a third or fourth piece of information.

2. Film element (4) according to claim 1,
**characterised in that**
the first envelope curve (47) has an asymmetrical relief profile.

3. Film element according to one of the preceding claims,
**characterised in that**
the first region (81, 90) is formed of two or more first subregions (83, 91) which have a strip-shaped design with a width of less than 300µm, the centroids of the first subregions (83, 91) are spaced apart from one another according to a periodic first grid having a grid width of less than 300µm and/or the width of the first subregion (91) is varied to form a grey-scale image.

4. Film element according to one of the preceding claims,
**characterised in that**
the first region (81, 90) is formed of two or more first subregions (83, 91) which have a strip-shaped design with a width of less than 300µm, the second region (82) is formed of two or more second subregions (84) which have a strip-shaped design with a width of less than 300µm, the second subregions (84) are spaced apart from one another according to a periodic second grid having a grid width of less than 300µm and a second subregion is arranged at least in regions between two first subregions.

5. Film element (2) according to one of the preceding claims,
**characterised in that**
the first and the second pieces of information and/or the third and fourth pieces of information constitute complementary pieces of information.

6. Film element according to one of the preceding claims,
**characterised in that**
the base area, with respect to which the element surfaces are aligned substantially in parallel, is inclined with respect to the second surface of the replication layer lying opposite the first surface of the replication layer and preferably forms an angle of more than 5° with this.

## Revendications

1. Elément de film (1, 4, 7) avec une couche de réplication (23, 43), dans lequel dans une première surface de la couche de réplication, une structure de surface (27) optiquement active est moulée,
dans lequel la structure de surface (27) est formée, dans au moins une première zone (31, 35, 73) de l'élément de film, par un premier relief de surface (46) diffractif, lequel est constitué par une pluralité d'éléments se suivant les uns les autres, suivant une première enveloppante (28, 47), dans lequel les éléments sont constitués respectivement par une face d'élément (29, 48) disposée sensiblement de manière parallèle par rapport à une face de base et par au moins un flanc situé dans le prolongement de la face d'élément adjacente ou des faces d'élément adjacentes, les faces d'élément (29, 48) d'éléments adjacents sont espacées dans une direction perpendiculaire au plan de base à une première distance optique ou à un multiple de la première distance optique, dans lequel la première distance optique est comprise entre 150 nm et 800 nm, de manière préférée entre 150 nm et 400 nm et la première enveloppante (28, 47) présente une profondeur optique supérieure à 450 nm,
dans lequel la première enveloppante (28, 47) présente une fréquence spatiale comprise entre 100 L/mm et 2 000 L/mm et la forme de relief et la fréquence spatiale de l'enveloppante (28, 47) sont choisies de telle sorte que la lumière incidente est diffractée dans une ou dans plusieurs premières directions afin de représenter une première information, dont la valeur de couleur est de plus définie par la première distance optique, et que la première enveloppante présente, dans une première direction spatiale, une première fréquence spatiale constante et que la première enveloppante présente, dans une deuxième direction spatiale différente de la première direction spatiale, une deuxième fréquence spatiale constante, qui se distingue de la première fréquence spatiale constante, **caractérisé en ce que** dans au moins une deuxième zone (32, 33, 34, 36, 74), la structure de surface est formée par un deuxième relief de surface (49) se distinguant du premier relief de surface, lequel représente une deuxième information, dans lequel le deuxième élément de surface est un relief de surface achromatique, en particulier une structure de nappe, une macrostructure ou un réseau blaze, et **en ce que** la première et/ou la deuxième zone (31, 34) sont formées de manière à présenter une forme de motif sous la forme d'une troisième ou d'une quatrième information.

2. Elément de film (4) selon la revendication 1,
**caractérisé en ce**
**que** la première enveloppante (47) possède un profil en relief asymétrique.

3. Elément de film selon l'une quelconque des revendications précédentes,
**caractérisé en ce**
**que** la première zone (81, 90) est formée par deux premières zones partielles (83, 91) ou plus, qui possèdent une forme de bande avec une largeur inférieure à 300 µm, en ce que les centres de gravité de face des premières zones partielles (83, 91) sont espacés les uns des autres selon une première trame périodique avec une largeur de trame inférieure à 300 µm, et/ou en ce que la largeur des premières zones partielles (91) servant à réaliser une image d'échelle de gris varie.

4. Elément de film selon l'une quelconque des revendications précédentes,
**caractérisé en ce**
**que** la première zone (81, 90) est formée par deux premières zones partielles (83, 91) ou plus, qui possèdent une forme de bande avec une largeur inférieure à 300 µm, en ce que la deuxième zone (82) est formée par deux deuxièmes zones partielles (84) ou plus, qui possèdent une forme de bande avec une largeur inférieure à 300 µm, en ce que les deuxièmes zones partielles (84) sont espacées les unes des autres selon une deuxième trame périodique avec une largeur de trame inférieure à 300 µm, et une deuxième zone partielle est disposée au moins par endroits entre deux premières zones partielles.

5. Elément de film (2) selon l'une quelconque des revendications précédentes,
**caractérisé en ce**
**que** la première et la deuxième information et/ou la troisième et la quatrième information représentent des informations se complétant.

6. Elément de film selon l'une quelconque des revendications précédentes,
**caractérisé en ce**
**que** la surface de base, vers laquelle les faces d'élément sont orientées sensiblement de manière parallèle, est inclinée par rapport à la deuxième surface, faisant face à la première surface de la couche de réplication, de la couche de réplication et forme de préférence avec cette dernière un angle supérieur à 5°.
